# EUROPEAN PATENT APPLICATION

(11) **EP 4 393 304 A1**
(43) Date of publication of application: **03.07.2024**
(21) Application number: 23211792.9
(22) Date of filing: 23.11.2023
(51) Int. Cl.: A01M 7/00

(54) **AN AGRICULTURAL VEHICLE HAVING A LIQUID HOLDING TANK, A LIQUID HOLDING TANK, AND RELATED METHODS AND SYSTEMS**

(30) Priority: 13.12.2022 US 202263387109 P
(71) Applicant: Agco Corporation, Duluth, Georgia 30096 (US)
(72) Inventor: SMITH, Evan Thomas, Hesston, 67062-2094 (US)
(74) Representative: AGCO Intellectual Property Department

(57) **Abstract**

An agricultural vehicle includes a chassis, a plurality of ground-engaging elements, and a liquid holding tank (118). The liquid holding tank includes a first bladder (302) disposed within an interior of the liquid holding tank, the first bladder defining a first chamber (306) within the first bladder, and a second chamber (308) defined between a wall (304) of the liquid holding tank and an outer surface of the first bladder. A method of forming a liquid holding tank (118) of a vehicle includes disposing a first bladder (302) within an interior of the liquid holding tank, a first chamber (306) being defined within the first bladder and a second chamber (308) being defined between an inner wall surface (304) of the liquid holding tank and an exterior of the bladder, and causing both of the first chamber and the second chamber to be in fluid communication with a delivery system of an application system of the vehicle.

## Description

### FIELD

Embodiments of the present disclosure relate to mobile machines, such as self-propelled agricultural machines and similar vehicles.

### BACKGROUND

Some vehicles are configured to be operated in fields among row crops. Application machines (e.g., applicators) such as self-propelled sprayers, for example, may have a holding tank for holding a product to be applied to crops and a boom that extends outwardly from the vehicle to apply the product to the crop as the machine travels through the field. Applying products such as herbicides, pesticides, fertilizers, and bio-nutrients in liquid form is a common practice in agricultural crop production. Ensuring that sprayers are emptied in a correct field is important to ensuring that a given field receives a correct amount on product. Furthermore, ensuring that the sprayers are cleaned to avoid cross-contamination is importation to preventing unintended damage to subsequent fields. Cleaning the sprayers typically involves rinsing the holding tank and plumbing lines. Vehicles typically have a dedicated storage tank or compartment for holding rinse water to enable the rinsing and cleaning.

### BRIEF SUMMARY

Embodiments include a vehicle including a chassis, a plurality of ground-engaging elements coupled to the chassis of the vehicle, and a liquid holding tank mounted to the chassis and configured to hold at least one product. The liquid holding tank includes a wall having an inner wall surface defining an interior of the liquid holding tank, a first bladder disposed within the interior of the liquid holding tank, the first bladder defining a first chamber within the first bladder, a first inlet extending through the wall of the liquid holding tank and through the first bladder and in fluid communication with the first chamber, a second chamber defined between the inner wall surface of the wall of the liquid holding tank and an outer surface of the first bladder, and a second inlet extending through the wall of the liquid holding tank and in fluid communication with the second chamber.

The vehicle may be configured to hold a first product within the first chamber and a second product within the second chamber.

The liquid holding tank may also include a second bladder disposed within the interior of the liquid holding tank, the second bladder defining a third chamber within the second bladder.

The first bladder may include an elastomeric material.

At least a portion of the first bladder may be attached to the inner wall surface of the wall of the liquid holding tank.

At least a portion of the first bladder may line the inner wall surface of the wall of the liquid holding tank.

When the first chamber of the first bladder is in an at least substantially full state, the first bladder may occupy at least 8 percent of an overall internal volume of the liquid holding tank.

The first bladder may include a plurality of layers.

The vehicle may also include an application system that includes a delivery system configured to deliver products held within the first chamber and the second chamber during an agricultural process.

A volume of the second chamber may be inversely linearly related to a volume of the first chamber.

The application system may include a laterally extending boom, a plurality of hoses supported by the laterally extending boom, a plurality of pumps supported by the laterally extending boom, and a plurality of spray nozzles supported by the laterally extending boom.

The laterally extending boom may be configured to fold for transport.

The vehicle may also include an operator cabin including a display panel.

Embodiments include a method of forming a liquid holding tank of a vehicle that may include disposing a first bladder within an interior of the liquid holding tank, a first chamber being defined within the first bladder and a second chamber being defined between an inner wall surface of the liquid holding tank and an exterior of the bladder, causing a first inlet extending through a wall of the liquid holding tank and through the first bladder to be in fluid communication with the first chamber, causing a second inlet extending through the wall of the liquid holding tank to be in fluid communication with the second chamber, and causing both of the first chamber and the second chamber to be in fluid communication with a delivery system of an application system of the vehicle.

The method may also include disposing a second bladder within the interior of the liquid holding tank, a third chamber being defined within the second bladder and causing the third chamber to be in fluid communication with the delivery system of the application system of the vehicle.

Embodiments include a liquid holding tank of an agricultural vehicle that is configured to hold at least one product, the liquid holding tank may include a first bladder disposed within an interior of the liquid holding tank, the first bladder defining a first chamber within the first bladder, a first inlet extending through a wall of the liquid holding tank and through the first bladder and in fluid communication with the first chamber, a second chamber defined within the liquid holding tank and outside of the first bladder, and a second inlet extending through the wall of the liquid holding tank and in fluid communication with the second chamber, where a volume of the second chamber is inversely linearly related to a volume of the first chamber.

Each of the first chamber and the second chamber are in fluid communication with a delivery system of an application system of the agricultural vehicle.

When the first chamber of the first bladder is in an at least substantially full state, the first bladder occupies at least 8 percent of an overall internal volume of the liquid holding tank.

The first bladder may include one or more of natural rubber (isoprene), styrene-butadiene rubber, butyl, nitrile, neoprene, ethylene propylene diene monomer (EPDM), silicone, Viton^{®}, polyurethane, or hydrogenated nitrile.

Each of the first chamber and the second chamber may be in fluid communication with the delivery system of the application system.

Other technical features may be readily apparent to one skilled in the art from the following figures, descriptions, and claims.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a perspective view of an agricultural applicator constructed and operable in accordance with principles disclosed herein;
FIG. 2 shows portions of a cabin of the applicator of FIG. 1 including one or more user interface elements allowing an operator to control the vehicle;
FIG. 3 shows a perspective cutout view of a liquid holding tank;
FIG. 4 shows a perspective cutout view of a liquid holding tank; and
FIG. 5 is a schematic view of a central controller.

### DETAILED DESCRIPTION

Illustrations presented herein are not meant to be actual views of any particular vehicle, application system, liquid holding tank, agricultural implement, component, or system, but are merely idealized representations that are employed to describe embodiments of the disclosure. Additionally, elements common between figures may retain the same numerical designation for convenience and clarity.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "third," etc. is used for clarity and convenience in understanding the disclosure and accompanying drawings, and does not connote or depend on any specific preference or order, except where the context clearly indicates otherwise.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

Embodiments include a vehicle (e.g., an applicator) for distributing a product over a soil surface and/or a crop within a field. As used herein, the term "product" refers to any liquid that can be or is typically applied to (e.g., distributed on) a field and/or crop during an agricultural process. For instance, a product may include one or more of a fertilizer, an herbicide, a pesticide, or bio nutrients. As used herein, a product may also refer to a rinse water for cleaning an application system of the vehicle. Additionally, a product may refer to an incompressible liquid.

The vehicle may include a liquid holding tank having a bladder within the liquid holding tank to compartmentalize the liquid holding tank and to define at least a first chamber and a second chamber within the liquid holding tank. The bladder may compartmentalize the liquid holding tank into a first product storage (e.g., a rinse water) and a second product storage (e.g., a fertilizer, an herbicide, a pesticide, or bio nutrients). The bladder may include a flexible material and may be expandable and collapsible. As a result, volumes of the first and second chambers may be changeable. Furthermore, a volume of the liquid holding tank that can potentially be occupied by the bladder at an at least substantially full state can be utilized to hold a first product (e.g., a rinse water) when the bladder is at least substantially full, a second product when the first bladder at least substantially empty, or both the first product and the second product when the bladder is only partially full.

The vehicle and the liquid holding tank of the present disclosure may be advantageous over conventional vehicles and liquid holding tanks. For example, with conventional vehicles and liquid holding tanks and for a given agricultural process (e.g., application of a product), the liquid holding tank often has to be filled with a product (e.g., herbicide) more than once to complete the given agricultural process. As a result, when rinse water is carried within a designated compartment (e.g., a rigid storage compartment) through a first portion of the given agricultural process or anytime when the rinse water is not needed, it results in increased soil compaction by carrying more weight than necessary. Furthermore, if rinse water is not carried, then the designated compartment (e.g., a rigid storage compartment) and the volume (e.g., carrying capacity) of the designated compartment is wasted and not utilized.

Conversely, when rinse water is not needed before a next refill of product for the vehicle and the liquid holding tank of the present disclosure, the bladder may not be filled, and at least substantially an entirety of the liquid holding tank may be filled with the product. As a result, the vehicle may hold more volume of a product in comparison to conventional vehicles having holding tanks with rigid compartments or multiple separate holding tanks. Moreover, when rinsing is expected prior to a next refill of product, the bladder may be filled with the rinse water. When carrying rinse water, the vehicle may carry at least substantially a same amount of product and rinse water as if the vehicle had liquid holding tank having rigid compartments or multiple separate holding tanks.

Additionally, the liquid holding tank of the present disclosure ensures that the volume that the bladder can occupy of the liquid holding tank is always available to hold product (e.g., a rinse water or another product) for a given agricultural process. For example, when rinse water is necessary, the bladder can be filled with rinse water, and when rinse water is not necessary, the same volume can be filled with another product (e.g., herbicide). As a result, the liquid holding tank of the present disclosure reduces waste by always having all of a volume (e.g., carrying capacity) of the liquid holding tank available instead of having a designated holding tank or a portion of a volume of a holding tank that can only be used for one type of product (e.g., rinse water).

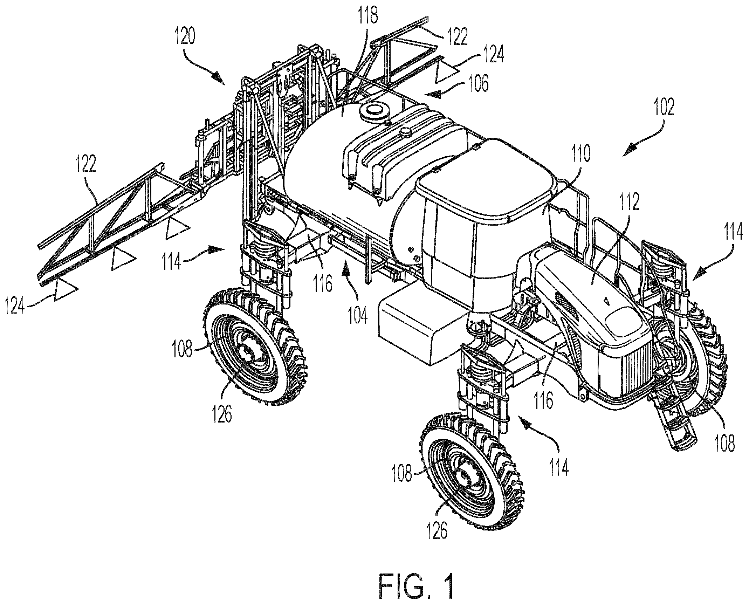

FIG. 1 is a perspective view of a vehicle 102 (e.g., an applicator) according to embodiments of the disclosure. In particular, the vehicle 102 is pictured as an agricultural material applicator including a chassis 104, an application system 106, a plurality of wheels 108 or other ground-engaging elements supporting the chassis 104 above a ground surface, an operator cabin 110, and an engine compartment 112. A plurality of support assemblies 114 may be interposed between the wheels 108 and the chassis support of the chassis 104 and provide suspension and/or steering functions. In some embodiments, the support assemblies 114 may further provide height adjustment.

Certain components of the vehicle 102 have been omitted from the figures for simplicity of illustration and to show certain features of the vehicle 102 that would otherwise be concealed. The engine, for example, has been omitted to illustrate components of the vehicle frame, including portions of the front axle 116. Certain hydraulic lines, such as hydraulic lines running to and from the support assemblies 114, are also omitted. The vehicle 102 is illustrated and discussed herein as an exemplary machine with which the support assemblies 114 may be used. U.S. Patent 9,180,747, "System and Method of Adjusting the Chassis Height of a Machine," granted November 10, 2015, discloses a number of different support assembly configurations that may be used.

The vehicle 102 includes a pair of front wheels 108 coupled to a front axle 116 and a pair of rear wheels 108 coupled to a rear axle 116 of the appropriate size and shape to allow the vehicle 102 to travel among row crops with minimal crop disturbance. As used herein, a "wheel" includes an inner, rigid wheel and an outer, flexible tire mounted on the inner wheel, unless otherwise specified. The particular size, shape, and configuration of the wheels 108 may vary substantially from one embodiment to another. In some embodiments, the vehicle 102 may include ground-engaging elements other than wheels, such as tracks, skis, etc. Hereinafter, reference will be made to a "wheel 108" or "wheels 108" with the understanding that the illustrated wheels 108 may be replaced with other types of ground-engaging elements.

The application system 106 is supported on the chassis 104 and may be useful for distributing products (e.g., liquids), such as fertilizer, pesticides, herbicides, bio-nutrients, etc. in a field. As shown in FIG. 1, the application system 106 includes a liquid holding tank 118 and a delivery system 120 for applying the product (e.g., liquids) from the liquid holding tank 118 to a crop or field. In some embodiments, the liquid holding tank 118 may have an overall capacity of between 200 gallons (757 l) and 2,000 gallons (7,570 l) and, more specifically, may have a capacity of 700 gallons (2,650 l), 900 gallons (3,304 l), 1,100 gallons (4,160 l), or 1,300 gallons (4,920 l). As is discussed in great detail below, the liquid holding tank 118 includes a bladder within the liquid holding tank 118 that defines a first chamber for holding a rinse water or a first product, while a second chamber is defined between an outside of the bladder and an inner surface of a wall of the liquid holding tank 118 and is for holding a second product.

The delivery system 120 includes a laterally extending boom 122 supporting hoses, pumps, and spray nozzles 124 or similar components for dispersing or otherwise delivering the contents (e.g., the products and/or rinse water) of the liquid holding tank 118 to a crop. The boom 122 may be configured to fold for transport.

In some embodiments, the vehicle 102 may include a combination of a towing vehicle (e.g., a tractor) and an applicator implement (e.g, a pull-type and/or towed applicator). In additional embodiments, the vehicle 102 may include one or more of an applicator plane, an applicator helicopter, or an unmanned aerial vehicle (e.g., drone).

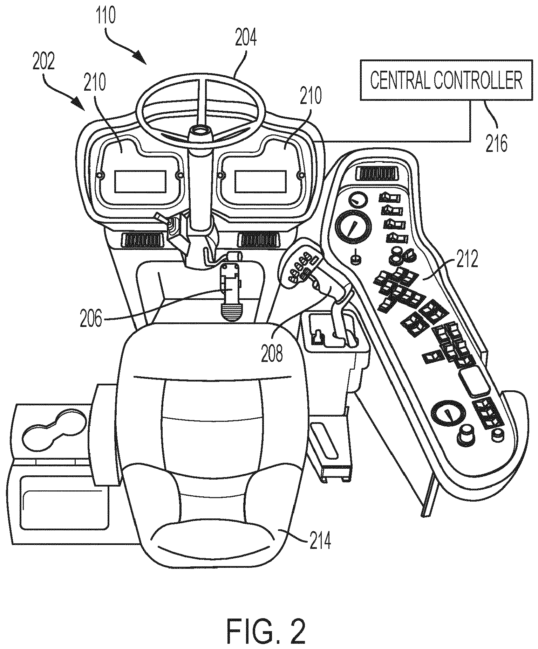

FIG. 2 shows a simplified view of an interior of the operator cabin 110. The operator cabin 110 or "cab" is supported on the chassis 104 and may be positioned forward of (as shown in FIG. 1) or behind the application system 106. The operator cabin 110 may include a control environment 202 which may include a steering wheel 204, one or more pedals 206, a drive lever 208, one or more electronic display panels 210, and a control panel 212 including buttons, switches, levers, gauges, and/or other user interface elements. The various components of the control environment 202 enable the operator to control the functions of the vehicle 102, including driving and operating vehicle 102 and the application system 106. The various user interface elements are positioned around and proximate a seat 214 for easy access by an operator during operation of the vehicle 102. In some embodiments, the control environment 202 may include a touchscreen display. For example, one or both of the electronic display panels 210 may be or include a touchscreen, or a display terminal with a touchscreen may be mounted on or near the control panel 212. An orientation of elements of the operator cabin 110 may be different depending on a type of the vehicle 102.

One or more elements of the control environment 202 may be operably coupled to a central controller 216 of the vehicle 102. The central controller 216 may be configured to control one or more operations and devices of the vehicle 102 and/or the application system 106. The central controller 216 is described in greater detail below.

In some embodiments, the vehicle 102 may not include an operator cabin 110 or may include a limited operator cabin 110. As a non-limiting example, the vehicle 102 may be an autonomous machine, and the operator cabin 110 may be omitted. In such embodiments, the central controller 216 may operate the vehicle 102 and may receive at least some instructions from a remote operator or system via a wireless link. For example, the central controller 216 may be in communication with one or more central servers or remote devices and may receive instructions from the one or more central servers or remote devices. Moreover, the central controller 216 may send operation data to the one or more central servers or remote devices for display to a remote operator.

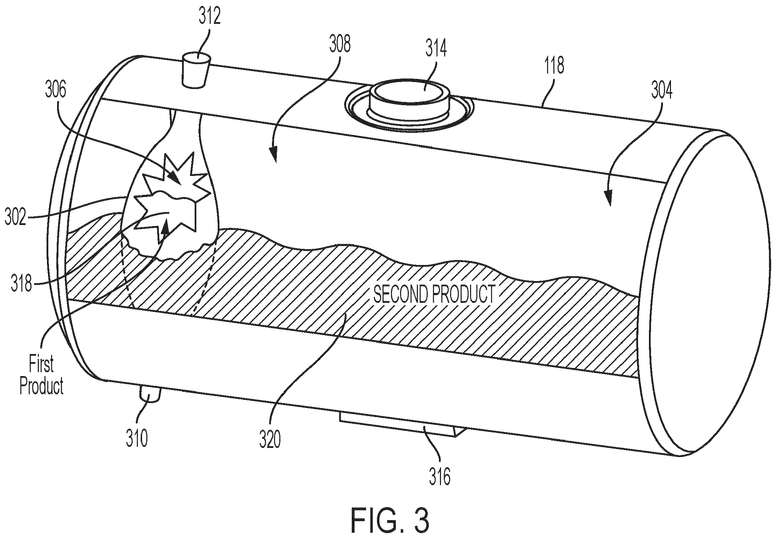

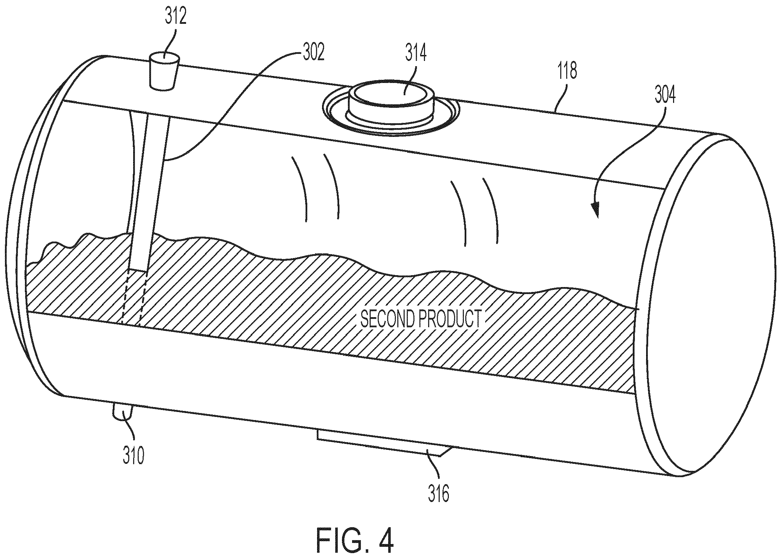

FIG. 3 and FIG. 4 show perspective cutout views of the liquid holding tank 118 of the vehicle 102 according to some embodiments of the disclosure. In particular, a portion of an outer wall of the liquid holding tank 118 is removed in FIGS. 3 and 4 to better show internal components of the liquid holding tank 118. As shown in FIG. 3 and FIG. 4, the liquid holding tank 118 may include a wall (e.g., an outer wall) having an inner wall surface 304 defining an interior of the liquid holding tank 118. The wall may include an at least substantially rigid material. As used herein, the term "rigid" may refer to a material that does not significantly bend or flex when subjected to one or more forces. For example, the term "rigid" may refer to an at least substantially inflexible material.

As noted above, the liquid holding tank 118 may include a bladder 302 disposed within the interior of the liquid holding tank 118. FIG. 3 shows the bladder 302 in an at least partially expanded state (e.g., at least partially full state), and FIG. 4 shows the bladder 302 in a collapsed state (e.g., at least substantially empty state). Furthermore, a portion of the bladder 302 is removed in FIG. 3 to better show an interior of the bladder 302. Some elements of the liquid holding tank 118 are removed in FIG. 4 for clarity. In some embodiments, at least a portion of the bladder 302 may be attached to the inner wall surface 304 of the liquid holding tank 118. For example, at least a portion of the bladder 302 may line a portion of the inner wall surface 304 of the liquid holding tank 118.

An interior of the bladder 302 may define a first chamber 306 for holding liquid, and a second chamber 308 for holding liquid may be defined between the inner wall surface 304 of the liquid holding tank 118 and an outer surface of the bladder 302. Both of the first chamber 306 and the second chamber 308 may be in fluid communication with the delivery system 120 of the application system 106. In some embodiments, the first chamber 306 may be utilized to hold a first product (e.g., a rinse water) during a agricultural process (e.g., application of fertilizer, pesticide, herbicide, bio-nutrients), and the second chamber 308 may be utilized to hold a second product (e.g., the fertilizer, pesticide, herbicide, and/or bio-nutrients) during the agricultural process.

In one or more embodiments, when the bladder 302 is in a fully expanded state (e.g., full of product), the bladder 302 may occupy at least about 8 percent of an overall internal volume of the liquid holding tank 118. For example, the bladder 302, when full, may occupy at least about 8 percent, 10 percent, 15 percent, 20 percent, 25 percent, or more of the overall internal volume of the liquid holding tank 118.

In some embodiments, the bladder 302 may include an elastomeric material (e.g., a rubber material). For example, the bladder 302 may include one or more of natural rubber (isoprene), styrene-butadiene rubber, butyl, nitrile, neoprene, ethylene propylene diene monomer (EPDM), silicone, Viton^{®}, polyurethane, or hydrogenated nitrile. Additionally, in some embodiments, the bladder 302 may include multiple layers, and the multiple layers may vary in material from one layer to another. For instance, a first layer of the bladder 302 may include a first elastomeric material, and a second layer of the bladder 302 may include a second elastomeric material.

Furthermore, the bladder 302 may include a flexible material that permits the bladder 302 to change shape and size responsive to a fill level of the bladder 302 (e.g., an amount of product inserted into the bladder 302). Moreover, the bladder 302 may include a flexible material that permits the material of the bladder 302 to stretch and constrict responsive to a fill level of the first chamber 306 and the bladder 302. For instance, in some embodiments, the bladder 302 may operate similarly to a balloon and may stretch at higher fill levels. As a result, the bladder 302 may provide a relatively large range of available fill levels without occupying a substantial amount of the interior of the liquid holding tank 118 when the bladder 302 is empty. By having a relatively large range of available fill levels, the bladder 302 may provide a versatile and changeable first chamber 306 where a fill level can be chosen depending on a given requirement of an agricultural process. Furthermore, because the bladder 302 is flexible, a volume of the first chamber 306 is variable and changeable. Moreover, because the bladder 302 is flexible and changeable and is disposed within the liquid holding tank 118, a volume of the second chamber 308 is variable and changeable. As a result of the foregoing, a volume of the second chamber 308 is dependent on a volume of the first chamber 306. Put another way, the volume of the second chamber 308 plus the volume of the first chamber 306 equal a constant total-the two volumes have an inverse linear relationship. As a volume of the first chamber 306 increases, a volume of the second chamber 308 decreases and vice versa.

In some embodiments, a volume of the first chamber 306 may be dependent on an order by which the first chamber 306 and the second chamber 308 are filled with product. For example, if the second chamber 308 is filled first, the product inserted into the second chamber 308 may push the bladder 302 against the inner wall surface 304 of the liquid holding tank 118 and the volume of the first chamber 306 may be at least substantially zero. Conversely, if the first chamber 306 is filled first, the volume of the first chamber 306 may be equal to a volume of a product inserted into the first chamber 306, and the volume of the second chamber 308 may be equal to an overall internal volume of the liquid holding tank 118 minus the volume of the first chamber 306. In view of the foregoing, the volume of the first chamber 306 may change as product from the first chamber 306 is passed through the application system 106 (e.g., withdrawn from the first chamber 306) during an application process.

The first chamber 306 and the second chamber 308 may each have a respective inlet 312, 314 and a respective outlet 310, 316. In some embodiments, the inlet 312 and the outlet 310 for the first chamber 306 may comprise a same opening/pathway, and the inlet 314 and outlet 316 for the second chamber 308 may comprise a same opening/pathway. As a non-limiting example, the inlet 312 and the outlet 310 for the first chamber 306 may include a same pathway that is utilized for both filling the first chamber 306 and emptying the first chamber 306. The inlet 312 and the outlet 310 of the first chamber 306 may extend through the wall of the liquid holding tank 118 and a wall of the bladder 302 and may interface with the bladder 302, and the inlet 314 and the outlet 316 of the second chamber 308 may extend through the wall of the liquid holding tank 118 and may interface with the wall of the liquid holding tank 118. The inlet 312 and the outlet 310 of the first chamber 306 may be in fluid communication with the first chamber 306, and the inlet 314 and the outlet 316 of the second chamber 308 may be in fluid communication with the second chamber 308.

In some embodiments, the liquid holding tank 118 may include a plurality of bladders 302. For example, the liquid holding tank 118 may include two or more bladders 302 defining two or more chambers for holding products.

In some embodiments, the liquid holding tank 118 may include one or more sensors 318 within the first chamber 306 and one or more sensors 320 with the second chamber 308. The sensors 318, 320 may provide data (e.g., pressure data, displacement data, or optical data) to the central controller 216 for determining fill levels of the first chamber 306 and the second chamber 308. Furthermore, the determined fill levels may be displayed on one or more display panels 210 of the operator cabin 110.

Referring to FIG. 1, FIG. 3, and FIG. 4 together, the liquid holding tank 118 may provide advantages over conventional holding tanks. For example, typically vehicles (e.g., applicators) have multiple designated and separate holding tanks with at least one holding tank designated for holding rinse water. The holding tank designated for holding rinse water cannot be used to hold fertilizer, herbicide, pesticide, or bio-nutrients in order to avoid cross-contamination. As a result, rinse water is typically carried in the designated tank throughout an agricultural process increasing the weight of the vehicle and leading to more soil compaction. Moreover, the volume (e.g., the available capacity) of the holding tank designated to holding rinse water is wasted when rinse water is not needed during an agricultural process or a portion of an agricultural process.

Conversely, the bladder 302 of present disclosure is flexible and can be collapsed to permit additional space for a product (e.g., fertilizer, herbicide, pesticide, or bio-nutrients) within the liquid holding tank 118 when rinse water is not needed. As a result, when rinse water will not be needed prior to a next refill of the liquid holding tank 118 during a product application process, the bladder 302 can be collapsed and pressed against a lateral side of the liquid holding tank 118 and more of the liquid holding tank 118 (e.g., at least substantially an entirety of the liquid holding tank 118) can be utilized for holding product other than rinse water. The foregoing permits the liquid holding tank 118 to hold more product other than rinse water than if rigid compartments where present within the liquid holding tank 118. Furthermore, whenever rinsing is expected prior to a next refill of product, the bladder 302 may be filled prior to filling a remainder of the liquid holding tank 118 (e.g., the second chamber). In view of the foregoing, the liquid holding tank 118 and the bladder 302 of the disclosure avoids wasting carrying capacity. For example, at least substantially an entirety of the carrying capacity of the liquid holding tank 118 (absent the volume of the bladder 302 itself) is always available for product whether that product includes rinse water or another product.

Furthermore, in applications utilizing multiple products (e.g., an herbicide in addition to another product), the liquid holding tank 118, in combination with the bladder 302 or multiple bladders 302, may provide a range of available ratios between a first given product within the first chamber 306 of the liquid holding tank 118 and a second given product within the second chamber 308 of the liquid holding tank 118. In particular, due to the flexibility of the bladder 302, more or less of the first given product may be added to the bladder 302 and more of less of the second given product may be added to the second chamber 308 depending on an amount of the first given product added to the first bladder 302. In particular, the liquid holding tank 118 of the present disclosure is not bound to rigid ratios of products created by rigid barriers within typical holding tanks. Rather, the liquid holding tank 118 of the present disclosure provides a range of available ratios of products. Accordingly, the liquid holding tank 118 of the present disclosure provides a more versatile holding tank in comparison to conventional holding tanks.

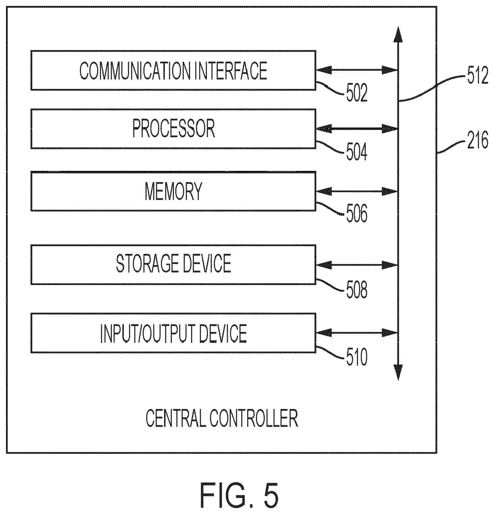

FIG. 5 is a schematic view of the central controller 216, which may at least partially operate the vehicle 102 and application system 106 according to some embodiments of the disclosure. The central controller 216 may include a communication interface 502, a processor 504, a memory 506, a storage device 508, an input/output device 510, and a bus 512.

In some embodiments, the processor 504 includes hardware for executing instructions, such as those making up a computer program. As an example, and not by way of limitation, to execute instructions, the processor 504 may retrieve (or fetch) the instructions from an internal register, an internal cache, the memory 506, or the storage device 508 and decode and execute them. In some embodiments, the processor 504 may include one or more internal caches for data, instructions, or addresses. As an example, and not by way of limitation, the processor 504 may include one or more instruction caches, one or more data caches, and one or more translation look aside buffers (TLBs). Instructions in the instruction caches may be copies of instructions in the memory 506 or the storage device 508.

The memory 506 may be coupled to the processor 504. The memory 506 may be used for storing data, metadata, and programs for execution by the processor(s). The memory 506 may include one or more of volatile and non-volatile memories, such as Random-Access Memory ("RAM"), Read-Only Memory ("ROM"), a solid state disk ("SSD"), Flash, Phase Change Memory ("PCM"), or other types of data storage. The memory 506 may be internal or distributed memory.

The storage device 508 may include storage for storing data or instructions. As an example, and not by way of limitation, storage device 508 can comprise a non-transitory storage medium described above. The storage device 508 may include a hard disk drive (HDD), Flash memory, an optical disc, a magneto-optical disc, magnetic tape, or a Universal Serial Bus (USB) drive or a combination of two or more of these. The storage device 508 may include removable or non-removable (or fixed) media, where appropriate. The storage device 508 may be internal or external to the computing storage device 508. In one or more embodiments, the storage device 508 is non-volatile, solid-state memory. In other embodiments, the storage device 508 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The input/output device 510 may allow an operator of the vehicle 102 to provide input to, receive output from, and otherwise transfer data to and receive data from central controller 216. The input/output device 510 may include a mouse, a keypad or a keyboard, a joystick, a touch screen, a camera, an optical scanner, network interface, modem, other known I/O devices, or a combination of such I/O interfaces. The input/output device 510 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 510 is configured to provide graphical data to a display for presentation to an operator. For instance, the input/output device 510 may include the display panel 210 of the operator cabin 110. The graphical data may be representative of one or more graphical user interfaces and/or any other graphical content as may serve a particular implementation. As is described above, the central controller 216 and the input/output device 510 may be utilized to display data (e.g., images and/or video data) regarding fill levels of the first chamber 306 and the second chamber 308 to assist an operator in operating the vehicle 102 and the application system 106.

The communication interface 502 can include hardware, software, or both. The communication interface 502 may provide one or more interfaces for communication (such as, for example, packet-based communication) between the central controller 216 and one or more other computing devices or networks (e.g., a server). As an example, and not by way of limitation, the communication interface 502 may include a network interface controller (NIC) or network adapter for communicating with an Ethernet or other wire-based network or a wireless NIC (WNIC) or wireless adapter for communicating with a wireless network, such as a WI-FI.

In some embodiments, the bus 512 (e.g., a Controller Area Network (CAN) bus) may include hardware, software, or both that couples components of central controller 216 to each other and to external components.

All references cited herein are incorporated herein in their entireties. If there is a conflict between definitions herein and in an incorporated reference, the definition herein shall control.

The embodiments of the disclosure described above and illustrated in the accompanying drawings do not limit the scope of the disclosure, which is encompassed by the scope of the appended claims and their legal equivalents. Any equivalent embodiments are within the scope of this disclosure. Indeed, various modifications of the disclosure, in addition to those shown and described herein, such as alternate useful combinations of the elements described, will become apparent to those skilled in the art from the description. Such modifications and embodiments also fall within the scope of the appended claims and equivalents.

## Claims

1. A vehicle, comprising:
a chassis;
a plurality of ground-engaging elements coupled to the chassis of the vehicle; and
a liquid holding tank mounted to the chassis and configured to hold at least one product, the liquid holding tank comprising:
a wall having an inner wall surface defining an interior of the liquid holding tank;
a first bladder disposed within the interior of the liquid holding tank, the first bladder defining a first chamber within the first bladder;
a first inlet extending through the wall of the liquid holding tank and through the first bladder and in fluid communication with the first chamber;
a second chamber defined between the inner wall surface of the wall of the liquid holding tank and an outer surface of the first bladder; and
a second inlet extending through the wall of the liquid holding tank and in fluid communication with the second chamber.

2. The vehicle of claim 1, wherein the liquid holding tank is configured to hold a first product within the first chamber and a second product within the second chamber.

3. The vehicle of claim 1 or 2, wherein the liquid holding tank comprises a second bladder disposed within the interior of the liquid holding tank, the second bladder defining a third chamber within the second bladder.

4. The vehicle of any one of claims 1 to 3, wherein the first bladder comprises an elastomeric material.

5. The vehicle of claim 4, wherein the first bladder comprises one or more of natural rubber (isoprene), styrene-butadiene rubber, butyl, nitrile, neoprene, ethylene propylene diene monomer (EPDM), silicone, Viton^{®}, polyurethane, or hydrogenated nitrile.

6. The vehicle of any one of claims 1 to 5, wherein at least a portion of the first bladder is attached to the inner wall surface of the wall of the liquid holding tank.

7. The vehicle of any one of claims 1 to 6, wherein at least a portion of the first bladder lines the inner wall surface of the wall of the liquid holding tank.

8. The vehicle of any one of claims 1 to 7, wherein, when the first chamber of the first bladder is in an at least substantially full state, the first bladder occupies at least about 8 percent of an overall internal volume of the liquid holding tank.

9. The vehicle of any one of claims 1 to 8, wherein the first bladder comprises a plurality of layers.

10. The vehicle of any one of claims 1 to 9, further comprising an application system comprising a delivery system configured to deliver products held within the first chamber and the second chamber during an agricultural process.

11. The vehicle of claim 10, wherein each of the first chamber and the second chamber are in fluid communication with the delivery system of the application system.

12. The vehicle of any one of claims 1 to 11, wherein a volume of the second chamber is inversely linearly related to a volume of the first chamber.

13. The vehicle of any one of claims 1 to 12, further comprising an application system comprising:
a laterally extending boom;
a plurality of hoses supported by the laterally extending boom;
a plurality of pumps supported by the laterally extending boom; and
a plurality of spray nozzles supported by the laterally extending boom.

14. A method of forming a liquid holding tank of a vehicle, the method comprising:
disposing a first bladder within an interior of the liquid holding tank, a first chamber being defined within the first bladder and a second chamber being defined between an inner wall surface of the liquid holding tank and an exterior of the bladder;
causing a first inlet extending through a wall of the liquid holding tank and through the first bladder to be in fluid communication with the first chamber;
causing a second inlet extending through the wall of the liquid holding tank to be in fluid communication with the second chamber; and
causing both of the first chamber and the second chamber to be in fluid communication with a delivery system of an application system of the vehicle.

15. The method of claim 16, further comprising:
disposing a second bladder within the interior of the liquid holding tank, a third chamber being defined within the second bladder; and
causing the third chamber to be in fluid communication with the delivery system of the application system of the vehicle.
